# EUROPÄISCHE PATENTSCHRIFT

(11) **EP 1 300 278 B1**
(45) Veröffentlichungstag und Bekanntmachung des Hinweises auf die Patenterteilung: **13.06.2007**
(21) Anmeldenummer: 03090006.2
(22) Anmeldetag: 16.08.2000
(51) Int. Cl.: B60K 35/00, B60R 16/02

(54) **Verfahren und Vorrichtung zur Darstellung von Reifendrücken eines Kraftfahrzeuges**
Procedure and device for representing tire pressures of a motor vehicle
Procédé et dispositif pour représenter des pressions de pneumatiques d'un véhicule automobile

(30) Priorität: 03.09.1999 DE 19941953
(43) Veröffentlichungstag der Anmeldung: 09.04.2003
(62) Teilanmeldung aus: 00960469.5
(73) Patentinhaber: Volkswagen AG, 38436 Wolfsburg (DE)
(72) Erfinder: Heimermann, Matthias, 38302 Wolfenbüttel (DE); Lilienthal, Jörg, 38518 Gifhorn (DE)
(74) Vertreter: Bressel und Kollegen

(56) Entgegenhaltungen:
- EP-A- 0 855 293
- US-A- 4 909 074
- US-A- 5 741 966
- PATENT ABSTRACTS OF JAPAN vol. 1995, no. 10, 30. November 1995 (1995-11-30) & JP 07 172214 A (SUMITOMO RUBBER IND LTD;OTHERS: 01), 11. Juli 1995 (1995-07-11)

## Beschreibung

Die Erfindung betrifft ein Verfahren und eine Vorrichtung zur Darstellung von Reifendrücken eines Kraftfahrzeuges, insbesondere von Reifendrücken.

Moderne Kraftfahrzeuge stellen ein äußerst komplexes Gesamtsystem dar, bei dem eine Vielzahl von Fahrzeugzuständen vom Kraftfahrzeugführer überwacht werden müssen. So muss beispielsweise der Kraftfahrzeugführer den Motorölstand, den Kraftstoffvorrat, den Reifendruck und die ordnungsgemäße Funktionalität der Fahrzeugleuchten überwachen und gegebenenfalls Gegenmaßnahmen vornehmen. Hierzu muss der Kraftfahrzeugführer teilweise visuelle Kontrollen mittels Ölmessstab vornehmen oder aber Kontrollleuchten bzw. Anzeigen beobachten. Dabei sind zum einen die Kontrollleuchten, die beispielsweise als LEDs ausgebildet sind, teilweise bei bestimmten Beleuchtungsverhältnissen schwer abzulesen, und zum anderen sind die visuellen Kontrollen recht aufwendig. Ein weiterer Nachteil ist, dass aufgrund des geringen Platzes in der Konsole die verschiedenen Kontrollleuchten und Anzeigen ziemlich ungeordnet angeordnet sind, so dass eine umfassende Kontrolle durch den Kraftfahrzeugführer erschwert ist.

Aus der US-4,909,074, die den Oberbegriff der Ansprüche 1 und 4 bildet, ist ein Verfahren zur Darstellung von Reifendrücken mittels eines Steuergerätes und einer Anzeigeeinheit bekannt, wobei das Steuergerät auf Fahrzeugzustandsdaten verschiedener Steuergeräte und Sensoren zugreifen kann und die erfassten Ist-Werte mit mindestens jeweils einen Soll-Wert verglichen werden. Auf der Anzeigeeinheit wird ein piktogrammförmiges Kraftfahrzeug dargestellt, wobei jedem Reifen ein Istfeld zugeordnet ist, in dem der aktuelle Reifendruck alphanumerisch, nämlich digital numerisch, dargestellt wird. Weiter wird in einer anderen Einstellung auch eine Darstellung der Abweichung vom Sollwert teilweise alphanumerisch vorgenommen.

Aus der EP 0 855 293 A2 ist eine Vorrichtung zur Darstellung von Reifendrücken bekannt, umfassend ein Steuergerät und eine Anzeigeeinheit, wobei das Steuergerät mit Fahrzeugzustandssensoren und/oder Fahrzeugzustandsdaten beinhaltenden Steuergeräten verbunden ist, und die erfassten Ist-Werte mit mindestens jeweils einem Soll-Wert verglichen werden, wobei die Anzeigeeinheit als Touch-Screen ausgebildet ist und das Steuergerät über einen Datenbus mit den Fahrzeugzustandssensoren und/oder den Steuergeräten verbunden ist.

Der Erfindung liegt daher das technische Problem zugrunde, ein Verfahren und eine Vorrichtung zur Darstellung von Fahrzeugzuständen zu schaffen, mittels derer der Kraftfahrzeugführer umfassend und übersichtlich informiert wird.

Die Lösung des technischen Problems ergibt sich durch die Gegenstände mit den Merkmalen der Patentansprüche 1 und 4. Weitere vorteilhafte Ausgestaltungen der Erfindung ergeben sich aus den Unteransprüchen.

Hierzu umfasst die Vorrichtung ein Steuergerät und eine Anzeigeeinheit, wobei das Steuergerät mit Fahrzeugzustandssensoren und / oder Fahrzeugzustandsdaten beinhaltende Steuergeräte verbunden ist und somit mindestens auf Reifendrücke zugreifen kann. Im Steuergerät sind Sollwerte und Prüfprozeduren abgelegt, so dass die erfassten Reifendrücke mit den Sollwerten vergleichbar sind. In einer Menüdarstellung der Reifendrücke ist ein piktogrammförmiges Kraftfahrzeug dargestellt, wobei jedem Reifen ein Istfeld und ein Feld zugeordnet ist. In dem Istfeld wird der aktuelle Reifendruck numerisch dargestellt. In dem Feld wird die Abweichung des erfassten Ist-Wertes vom Soll-Wert numerisch dargestellt. Unterschreitet ein Istwert seinen zugeordneten Sollwert, so wird dieser Istwert optisch hervorgehoben dargestellt. Die jeweiligen Fahrzeugzustandsdaten werden lokal am piktogrammförmigen Kraftfahrzeug an den Stellen angeordnet, der ihrem realen lokalen Auftreten im Kraftfahrzeug entspricht, was eine schnelle Erfassbarkeit durch den Kraftfahrzeugführer ermöglicht. Die Bezeichnung Unterschreiten ist dabei allgemein zu verstehen, dass im Einzelfall auch ein Überschreiten eines Sollwertes einen kritischen Zustand bedeuten kann. Hier und nachfolgend schließt Unterschreiten alle Abweichungsmöglichkeiten ein.

Die optische Hervorhebung kann dabei durch eine unterschiedliche farbliche und / oder größenmäßige Darstellung erfolgen.

In einer bevorzugten Ausführungsform wird ein Feld optisch hervorgehoben, wenn die Abweichung vom Sollwert einen bestimmten Grenzwert überschreitet.

In einer weiteren Ausführungsform sind die erfassten Reifendrücke automatisch oder manuell abspeicherbar.

In einer weiteren Ausführungsform ist das Steuergerät über einen Datenbus mit den Fahrzeugzustandssensoren und / oder den Steuergeräten verbunden.

In einer weiteren Ausführungsform ist die Anzeigeeinheit als Touch - Screen ausgebildet ist, deren berührungssensitive Felder eine Eingabeeinheit bilden.

Die Erfindung wird nachfolgend anhand eines bevorzugten Ausführungsbeispieles näher erläutert. Die Fig. zeigen:
Fig. 1 eine nicht erfindungs relevante Darstellung der obersten Funktionsebenen,
Fig. 2 eine nicht erfindungs relevante Menüdarstellung der Füllstände von Betriebsflüssigkeiten,
Fig. 3 eine Menüdarstellung gemäß der Erfindung der Reifendrücke und
Fig. 4 eine nicht erfindungs relevante Menüdarstellung der Fahrzeugbeleuchtungen.

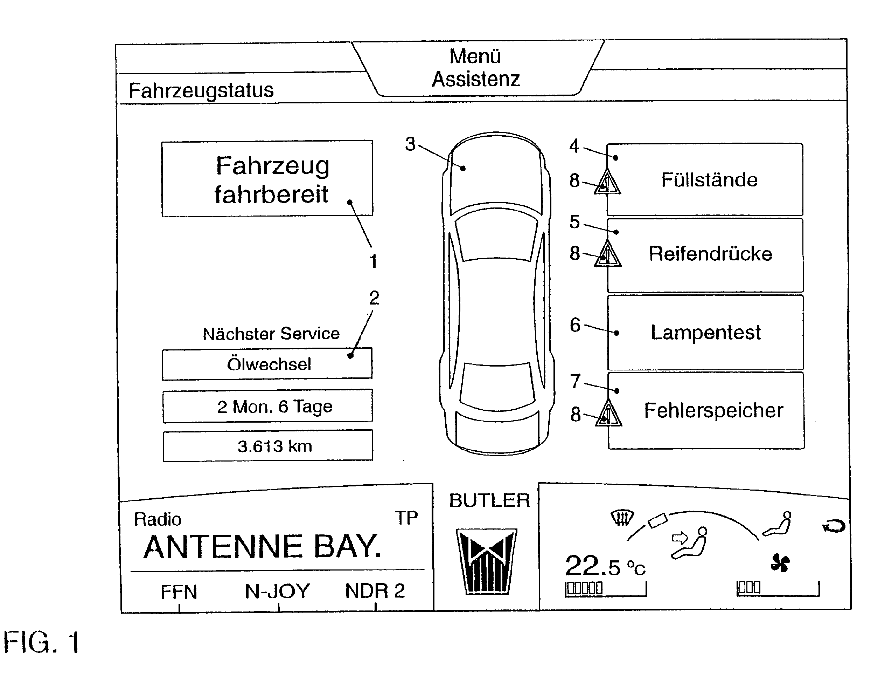

In der Fig. 1 ist ein nicht erfindungs relevantes Grundmenü für die Fahrzeugzustände dargestellt. Die Vorrichtung zur Darstellung von Fahrzeugzuständen umfaßt ein Steuergerät, mindestens eine Eingabeeinheit und eine Anzeigeeinheit, wobei das Steuergerät mit Fahrzeugzustandssensoren und / oder Fahrzeugzustandsdaten beinhaltenden Steuergeräten verbunden ist und somit auf alle relevanten Daten zugreifen kann. Erfaßte Fahrzeugzustandsdaten werden funktional untergliedert und sind auf der Anzeigeeinheit in unterschiedlichen Funktionsebenen darstellbar, wobei über die Eingabeeinheit die Funktionsebenen veränderbar sind.

Das Grundmenü umfaßt ein Fahrzeugzustandsfeld 1, eine Serviceanzeige 2, eine Draufsicht auf ein stilisiertes Kraftfahrzeug 3, ein Feld 4 "Füllstand", ein Feld 5 "Reifendruck", ein Feld 6 "Lampentest" und ein Feld 7 "Fehlerspeicher". In dem Fahrzeugzustandsfeld 1 wird alphanumerisch der Gesamtfahrzeugszustand durch ein nicht dargestelltes Steuergerät dem Kraftfahrzeugführer mitgeteilt. Dabei sind prinzipiell zwei verschiedene Ansätze möglich. Entweder zeigt das Steuergerät solange "Fahrzeug fahrbereit" an, wie das Kraftfahrzeug überhaupt technisch in Betrieb genommen werden kann, oder es wird angezeigt, ob das Kraftfahrzeug ohne schädliche Auswirkungen in Betrieb nehmbar ist. Ist beispielsweise der Motorölstand unter einem kritischen Wert, so kann für eine bestimmte Zeit das Kraftfahrzeug dennoch fahren, was jedoch zu entsprechenden Kolbenschäden führt, so daß vorzugsweise die zweite Alternative zur Anwendung kommt. In der Serviceanzeige 2 wird dem Kraftfahrzeugführer mitgeteilt, welcher Service als nächstes fällig ist und wann dieser Service vorzunehmen ist. Im dargestellten Beispiel ist als nächster Service ein Ölwechsel fällig, der entweder in zwei Monaten und sechs Tagen oder nach einer weiteren Fahrleistung von 3613 km zu erfolgen hat, je nach dem, welche Bedingung zuerst eintritt. Das stilisierte Kraftfahrzeug 3 dient zum einen zur Orientierung für die später noch zu erläuternden Menüs. Es ist jedoch auch möglich, das stilisierte Kraftfahrzeug 3 berührungssensitiv auf der Anzeigeeinheit auszubilden, so daß bei Berührung eines bestimmten Teils des Kraftfahrzeuges 3 die dort vorhandenen Fahrzeugzustandsdaten angezeigt werden. Ebenso sind die Felder 4 bis 7 berührungssensitiv ausgebildet, so daß die Berührung eines Feldes 4 bis 7 zu einem Wechsel zu dem zugehörigen Menü ermöglicht, was nachfolgend noch näher erläutert wird. Hat das Steuergerät irgendwelche kritischen Fahrzeugzustände erfasst,so wird ein piktogrammförmiges Achtung - Zeichen 8 an das zugehörige Feld 4 bis 7 eingeblendet. Im dargestellten Beispiel ist also ein kritischer Füllstand und ein kritischer Reifendruck erfasst worden, die auch abgespeichert werden sollten. Möchte nun der Kraftfahrzeugführer nähere Informationen zu den Füllständen der Betriebsflüssigkeiten erhalten, so muss dieser nur das entsprechende Feld 4 berühren.

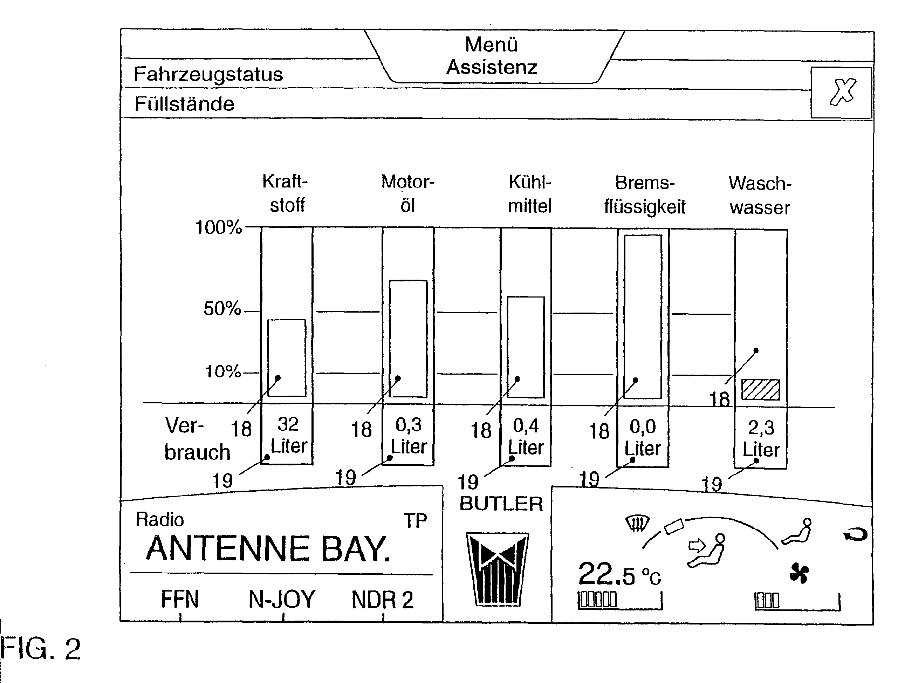

In der Fig. 2 sind die nicht erfindungs relevanten Füllstände für die Betriebsflüssigkeiten Kraftstoff, Motoröl, Kühlmittel, Bremsflüssigkeit und Wischwasser in Form von Balkendiagrammen dargestellt, wobei der jeweilige Balken 18 den aktuellen Füllstand in % zum maximal möglichen Füllstand angibt. Unterhalb der Balkendiagramme ist der jeweilige absolute Verbrauch 19 der Betriebsflüssigkeit alphanumerisch angegeben. Alternativ kann anstelle des Verbrauchs auch die absolute Füllmenge dargestellt werden. Fällt eine Verbrauchsflüssigkeit unter einen kritischen Wert, so wird der entsprechende Balken optisch hervorgehoben, indem dieser Balken beispielsweise in einer anderen Farbe dargestellt wird. Im dargestellten Beispiel ist die Waschwassermenge unter 10 % gefallen, so dass diese optisch hervorgehoben wird. Die kritische Grenze kann dabei für jede Betriebsflüssigkeit verschieden sein.

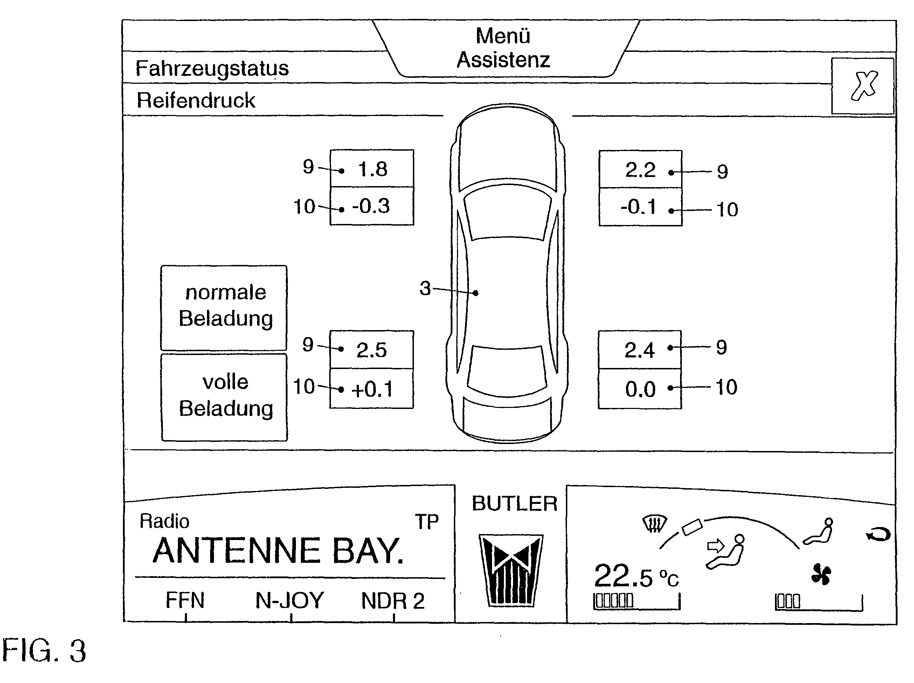

In der Fig. 3 ist nun das zugehörige Menü für die Reifendrücke bei normaler Beladung dargestellt. Hierzu wird jedem Reifen des stilisierten Kraftfahrzeuges 3 ein Istfeld 9 zugeordnet, in dem der aktuelle Reifendruck numerisch dargestellt ist. Unter jedem Istfeld 9 ist ein Feld 10 angeordnet, in dem die Abweichung vom Sollwert numerisch dargestellt ist. Überschreitet dabei die Abweichung vom Sollwert einen bestimmten Grenzwert, so wird das entsprechende Feld 10 optisch hervorgehoben. Im dargestellten Beispiel ist der Istwert des rechten hinteren Reifen 2,4, was dem Sollwert entspricht, so dass die Abweichung im zugeordneten Feld 10 entsprechend Null ist. Der Istwert des linken hinteren Reifens ist 2,5, so dass entsprechend die Abweichung in Feld 10 +0,1 beträgt. Entsprechend weicht der Istwert 2,2 der rechten vorderen Reifen um -0,1 vom Sollwert 2,3. Die Abweichung des linken vorderen Reifens hingegen beträgt -0,3 vom Grenzwert, der für die vorderen Reifen bei 2,1 liegt. Dadurch erhält also der Kraftfahrzeugführer unmittelbar die Information, dass er den Reifendruck um mindestens 0,3 erhöhen muss, um wieder in den zulässigen Toleranzbereich zu kommen.

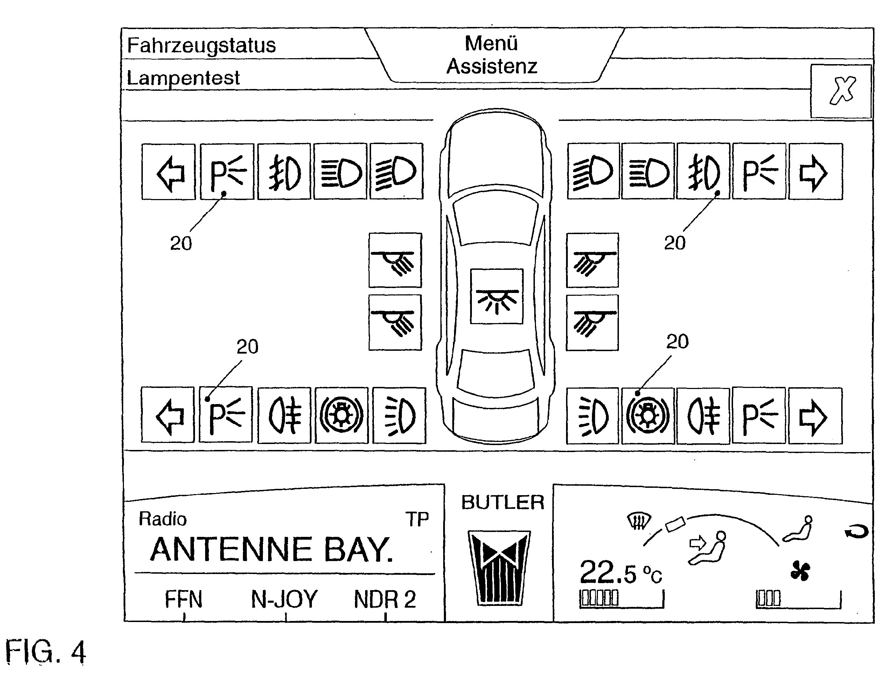

In der Fig. 4 ist das nicht erfindungs relevante Menü für die Fahrzeugleuchten dargestellt, wobei diese mittels ihrer üblichen Piktogramme 20 an ihrer Position im Kraftfahrzeug dargestellt sind.

Da nicht zu jederzeit alle Beleuchtungseinrichtungen eingeschaltet sind, wird für die Beleuchtungseinrichtungen eine im Steuergerät befindliche Prüfprozedur durchgeführt. Hierzu werden die einzelnen Beleuchtungseinrichtungen beispielsweise kurzzeitig im Startvorgang angesteuert und optisch und / oder elektrisch geprüft. Bei einer elektrischen Überprüfung wird beispielsweise kontrolliert, ob die Beleuchtungseinrichtung Strom zieht. Ist nämlich der Glühfaden gerissen, so ist der Stromkreis offen und es kann kein Strom fließen. Durch geeignete Wahl der Spannung kann dabei auch ein störendes Aufleuchten in der Prüfphase verhindert werden. Ergibt nun die Prüfphase eine oder mehrere defekte Beleuchtungseinrichtungen, so werden die zugehörigen Piktogramme 20 optisch hervorgehoben.

## Patentansprüche

1. Verfahren zur Darstellung von Reifendrücken mittels eines Steuergerätes und einer Anzeigeeinheit, wobei das Steuergerät auf Fahrzeugzustandsdaten verschiedener Steuergeräte und Sensoren zugreifen kann und die erfassten Ist - Werte mit mindestens jeweils einem Soll - Wert verglichen werden, wobei
ein piktogrammförmiges Kraftfahrzeug (3) dargestellt wird, wobei jedem Reifen ein Istfeld (9) zugeordnet ist, und
in dem Istfeld (9) der aktuelle Reifendruck numerisch dargestellt wird, **dadurch gekennzeichnet, dass** jedem Reifen auch ein Feld (10) zugeordnet ist und in dem Feld (10) die Abweichung vom Sollwert numerisch dargestellt wird.

2. Verfahren nach Anspruch 1, **dadurch gekennzeichnet, dass** ein Feld (10) optisch hervorgehoben wird, wenn die Abweichung vom Sollwert einen bestimmten Grenzwert überschreitet.

3. Verfahren nach Anspruch 1 oder 2, **dadurch gekennzeichnet, dass** die erfassten Reifendrücke automatisch oder manuell abspeicherbar sind.

4. Vorrichtung zur Darstellung von Reifendrücken umfassend ein Steuergerät und eine Anzeigeeinheit, wobei das Steuergerät mit Fahrzeugzustandssensoren und/oder Fahrzeugzustandsdaten beinhaltenden Steuergeräten verbunden ist, und die erfassten Ist - Werte mit mindestens jeweils einem Soll - Wert verglichen werden, wobei
ein piktogrammförmiges Kraftfahrzeug (3) darstellbar ist, wobei jedem Reifen ein Istfeld (9) zugeordnet ist, und
in dem Istfeld (9) der aktuelle Reifendruck numerisch darstellbar ist, **dadurch gekennzeichnet, dass** jedem Reifen auch ein Feld (10) zugeordnet ist und in dem Feld (10) die Abweichung vom Sollwert numerisch darstellbar ist.

5. Vorrichtung nach Anspruch 4, **dadurch gekennzeichnet, dass** das Steuergerät über einen Datenbus mit den Fahrzeugzustandssensoren und / oder den Steuergeräten verbunden ist.

6. Vorrichtung nach Anspruch 4 oder 5, **dadurch gekennzeichnet, dass** die Anzeigeeinheit als Touch - Screen ausgebildet ist, deren berührungssensitive Felder eine Eingabeeinheit bilden.

## Claims

1. Method for displaying tyre pressures by means of a controller and a display unit, wherein the controller can access vehicle state data of different controllers and sensors and the detected actual values are compared with at least one setpoint value in each case, wherein a pictographic motor vehicle (3) is displayed, wherein each tyre has an associated actual field (9) and the current tyre pressure is numerically displayed in the actual field (9), **characterized in that** each tyre also has an associated field (10) and the deviation from the setpoint value is numerically displayed in the field (10).

2. Method according to Claim 1, **characterized in that** a field (10) is visually emphasized when the deviation from the setpoint value exceeds a specific limit value.

3. Method according to Claim 1 or 2, **characterized in that** the detected tyre pressures can be automatically or manually stored.

4. Apparatus for displaying tyre pressures, comprising a controller and a display unit, wherein the controller is connected to vehicle state sensors and/or controllers which contain vehicle state data, and the detected actual values are compared with at least one setpoint value in each case, wherein a pictographic motor vehicle (3) can be displayed, wherein each tyre has an associated actual field (9) and the current tyre pressure can be numerically displayed in the actual field (9), **characterized in that** each tyre also has an associated field (10) and the deviation from the setpoint value can be numerically displayed in the field (10).

5. Apparatus according to Claim 4, **characterized in that** the controller is connected to the vehicle state sensors and/or to the controllers via a data bus.

6. Apparatus according to Claim 4 or 5, **characterized in that** the display unit is in the form of a touchscreen whose touch-sensitive fields form an input unit.

## Revendications

1. Procédé pour représenter des pressions de pneumatiques au moyen d'un appareil de commande et d'une unité d'affichage, l'appareil de commande pouvant recourir à des données d'état du véhicule de différents appareils de commande et capteurs, et les valeurs réelles enregistrées étant comparées avec au moins à chaque fois une valeur de consigne, un véhicule automobile (3) en forme de pictogramme étant représenté, une zone réelle (9) étant attribuée à chaque pneumatique, et la pression de pneumatique actuelle étant représentée sous forme numérique dans la zone réelle (9),
**caractérisé en ce que**
également une zone (10) est attribuée à chaque pneumatique et l'écart par rapport à la valeur de consigne est représenté sous forme numérique dans la zone (10).

2. Procédé selon la revendication 1, **caractérisé en ce qu'**une zone (10) est mise en évidence visuellement lorsque l'écart par rapport à la valeur de consigne dépasse une valeur limite définie.

3. Procédé selon la revendication 1 ou 2, **caractérisé en ce que** les pressions de pneumatiques enregistrées peuvent être mémorisées automatiquement ou manuellement.

4. Dispositif pour représenter des pressions pneumatiques comprenant un appareil de commande et une unité d'affichage, l'appareil de commande étant relié à des capteurs d'état de véhicule et/ou des appareils de commande contenant des données d'état de véhicule, et les valeurs réelles enregistrées étant comparées avec à chaque fois au moins une valeur de consigne, un véhicule automobile (3) en forme de pictogramme étant représenté, une zone réelle (9) étant attribuée à chaque pneumatique, et la pression de pneumatique actuelle étant représentée sous forme numérique dans la zone réelle (9), **caractérisé en ce que** à chaque pneumatique est attribuée également une zone (10) et l'écart par rapport à la valeur de consigne est représenté sous forme numérique dans la zone (10) .

5. Dispositif selon la revendication 4, **caractérisé en ce que** l'appareil de commande est relié par un bus de données aux capteurs d'état de véhicule et/ou aux appareils de commande.

6. Dispositif selon la revendication 4 ou 5, **caractérisé en ce que** l'unité d'affichage est conçue comme écran tactile, dont les zones sensibles au contact forment une unité d'entrée.
